# EUROPÄISCHE PATENTSCHRIFT

(11) **EP 0 464 598 B1**
(45) Veröffentlichungstag und Bekanntmachung des Hinweises auf die Patenterteilung: **14.12.1994**
(21) Anmeldenummer: 91110473.5
(22) Anmeldetag: 25.06.1991
(51) Int. Cl.: F16F 13/00

(54) **Elastisches Motorlager**
Elastic engine mount
Support de moteur élastique

(30) Priorität: 02.07.1990 DE 4021035
(43) Veröffentlichungstag der Anmeldung: 08.01.1992
(73) Patentinhaber: METZELER GIMETALL AG, D-80992 München (DE)
(72) Erfinder: Härtel, Volker, Dr., W-8034 Germering (DE)
(74) Vertreter: Seibert, Hannelore

(56) Entgegenhaltungen:
- EP-A- 0 119 626
- EP-A- 0 163 162
- EP-A- 0 290 181
- DE-A- 3 314 335
- DE-A- 3 431 117
- FR-A- 2 642 492
- GB-A- 2 205 921
- PATENT ABSTRACTS OF JAPAN, Band 12, Nr. 475 (M-774)[3322], 13. Dezember 1988;& JP-A-63 195 443 (EIJI ADACHI) 12-08-1988

## Beschreibung

Die Erfindung bezieht sich auf eine elastische Motorlagereinheit für Kraftfahrzeuge, bestehend aus einem Motorlager mit mindestens einem elastischen Gummikörper, der zwischen Motor und einem Träger der Fahrzeugkarosserie angeordnet ist, und einem elektrodynamisch in Schwingungen versetzbaren Entkoppelungssystem.

Eine derartige Motorlagereinheit ist aus der DE-A-3 314 335 bekannt. Bei dem dort beschriebenen Dämpfungssystem ist das Entkoppelungssystem, das aus mindestens einer elektrischen Spule und einem Magneten besteht, der eigentlichen Gummifeder des Lagers parallel geschaltet. Das bedeutet, daß die Veränderung der Magnetstärke stets auch abhängig ist von den vom Gummikörper aufgenommenen niederfrequenten Schwingungen großer Amplitude, da im wesentlichen allein abhängig davon die Spule in den Magneten eintauchen kann. Damit ist eine Erfassung und Dämmung nur hochfrequenter Schwingungen nur unzureichend möglich.

Der vorliegenden Erfindung liegt daher die Aufgabe zu Grunde, ein Motorlager zu schaffen, das einerseits eine hohe Dämpfung für niederfrequente Schwingungen großer Amplitude aufweist, andererseits aber auch bezüglich seines akustischen Verhaltens, d.h. bezüglich der Dämmung hochfrequenter Schwingungen, unter direkter Ansteuerung vorgegebener Frequenzbereiche optimiert ist.

Zur Lösung dieser Aufgabe ist erfindungsgemäß vorgesehen, daß der Gummikörper aus hochdämpfendem Material mit einem Verlustwinkel von über 12° besteht und das Entkoppelungssystem, das über den Gummikörper übertragene Schwingungen im Bereich von etwa 50 bis 300 Hz dämmt vollständig außerhalb des eigentlichen Motorlagers an dem karosserieseitigen Träger auf diesen einwirkend angeordnet ist und unter Ansteuerung von einem Schwingungssensor dynamische Wechselkräfte in Gegenphase zu den übertragenden hochfrequenten Schwingungen erzeugt.

Mit dieser karosserieseitigen Anordnung eines Entkoppelungssystems für hochfrequente Schwingungen, das unabhängig von dem Gummikörper arbeitet ist eine gezielt ansteuerbare Verbesserung des akustischen Verhaltens möglich, wobei durch die Verwendung eines hochdämpfenden Materials für den Gummikörper ein sehr gutes Dämpfungsverhalten für niederfrequente Schwingungen erreicht wird, wobei hochfrequente Schwingungen zur gesonderten Dämmung leichter durchgelassen werden.

Das Entkoppelungssystem selbst besteht zweckmäßigerweiser aus einem stationären Permanentmagneten und einer beweglichen elektrischen Spule, die mit einer Tilgermasse gekoppelt ist. Dabei kann der Permanentmagnet ringförmig ausgebildet und von einer elastischen Membran überspannt sein, die mittig eine Tilgermasse trägt und an die die elektrischen Spule angekoppelt ist.

Die Tilgermasse kann dabei topfförmig ausgebildet und von der Spule umschlossen sein.

Zweckmäßigerweise beträgt das Gewicht der Tilgermassen etwa 5 bis 100 Gramm.

Der Schwingungssensor selbst zur Ansteuerung des Entkoppelungssystems gibt zweckmäßigerweise schwingungsproportionale, jedoch phasenverschobene Signale an die Tilgerspule ab.

Besonders günstig ist es, wenn der Sensor aus einem seismischen System mit einer Masse und einer federbeaufschlagten Spule besteht, das ein seiner Schwingbewegung angenähert proportionales Signal abgibt.

Für eine mechanische Phasenverschiebung von etwa 180° zwischen Sensorspule und Tilgerspule ist es zweckmäßig, wenn die Masse der Sensorspule in Druckrichtung und die Masse der Tilgerspule in Zugrichtung -jeweils bezogen auf den Permanentmagneten- angeordnet sind.

Zur zusätzlichen Dämpfung niederfrequenter Schwingungen ist es ferner von Vorteil, wenn der Gummikörper eine Zwischenmasse aufweist.

Dabei kann diese metallische Zwischenmasse zwischen einem oberen, an die Motorstützen angeschlossenen Gummikörper und den unteren keilförmigen Gummikörpern angeordnet sein. Die Zwischenmasse sollte ein Gewicht von etwa 100 bis 1.000 Gramm aufweisen.

Anhand einer schematischen Zeichnung sind Aufbau und Funktionsweise eines Ausführungsbeispiels nach der Erfindung näher erläutert. Dabei zeigen:
- Fig. 1: das Prinzipbild einer elastischen Motorlagereinheit mit einem Keillager als Motorlager und einem Entkoppelungssystem,
- Fig. 2: einen Längsschnitt durch ein derartiges Keillager und durch das entsprechende, am Karosserieträger angeordnete Entkoppelungssystem und
- Fig. 3: eine gleichartige Lageranordnung mit einer Zwischenmasse.

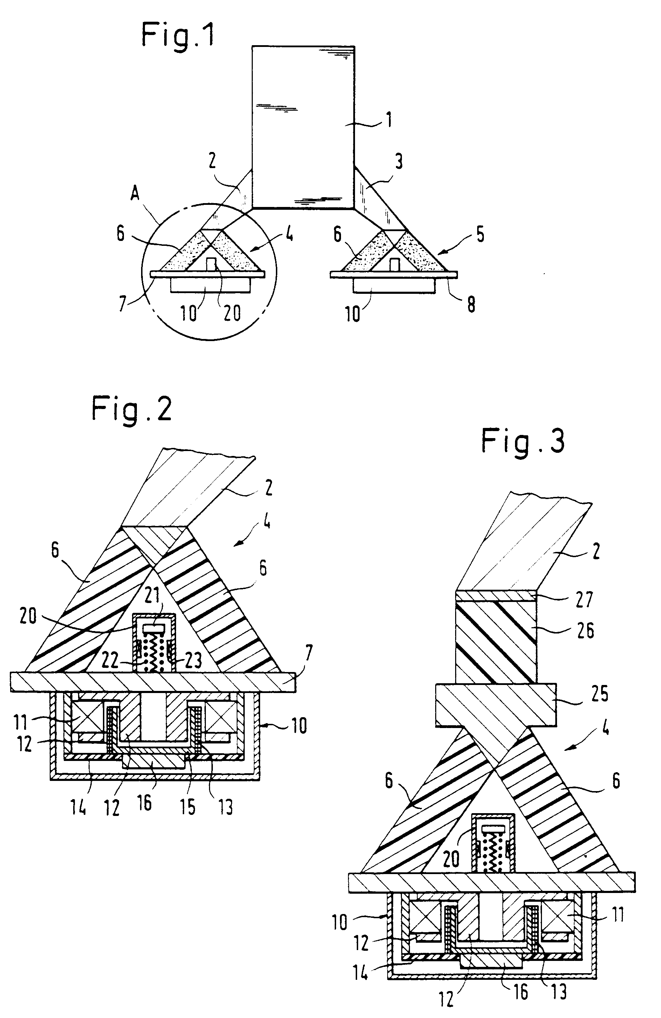

Entsprechend der schematischen Darstellung in Fig. 1 wird ein Motor 1 an einem Ende beispielsweise über zwei schräg verlaufende Stützen 2 und 3 und zwei Keillager 4 und 5 mit Gummikörpern 6 aus hochdämpfendem Material auf zwei karosserieseitigen Trägern 7 und 8 abgestützt.

Durch Motor- und Karosseriebewegungen eingeleitete Schwingungen größerer Amplitude im Bereich der Eigenfrequenzen von 5 bis 10 Hz werden von den Gummikörpern 6 durch Verwendung eines hochdämpfenden Gummis hinreichend gedämpft. Für hochfrequente Schwingungen von etwa 50 bis 300 Hz, also schon im akustischen Bereich, ist aber das Übertragungsverhalten eines solchen hochdämpfenden Gummis schlecht, so daß diese Schwingungen unzureichend gedämpft werden.

Zur Dämmung dieser hochfrequenten Schwingungen ist daher ein elektrodynamisches Entkopplungssystem 10 vorgesehen, das auf der Karossierieseite des Lagers, beispielsweise auf der Unterseite der Träger 7 und 8, angeordnet ist und entsprechende Gegenschwingungen erzeugt.

In Fig. 2 ist ein Schnitt im vergrößerten Maßstab durch den Bereich A aus Fig. 1 dargestellt. Dabei ist unterhalb des Trägers 7 das erfindungsgemäße Entkopplungssystem 10 angeordnet. Dieses besteht aus einem stationären Permanentmagneten 11 mit einem Weicheisenpfad 12, in dessen Spalt eine elektrische Spule 13 axial beweglich angeordnet ist, und zwar dadurch, daß sie an einem Ende an eine den Permanentmagneten 11 überspannende elastische Membran 14 angekoppelt ist. Die Spule 13 umschließt dabei eine topfförmige Tilgermasse 15, die ebenfalls mit der Membran 14 verbunden ist und auf die zusätzlich noch eine weitere Tilgermasse 16 aufgesetzt ist. Diese Tilgermassen 15 und 16 können dabei je nach Anforderung ein Gewicht von 5 bis 50 g aufweisen.

Zur Ansteuerung dieses Entkopplungssystems 10 ist nun in unmittelbarer Nähe auf der Karosserieseite des Lagers, beispielsweise auf der Oberseite des Träger 7, ein Sensor 20 angeordnet, der an eine nicht näher dargestellte Stromversorgung angeschlossen und mit der Spule 13 des Entkopplungssystems 10 verbunden ist. Dieser Sensor 20 weist zweckmäßigerweise ein Filter auf, das nur hochfrequente Schwingungen von beispielsweise mehr als 50 Hz auf der karosserieseitigen Lagerseite erfaßt und ein zu diesen Schwingbewegungen proportionales elektrisches Signal abgibt. Bei geeigneter Entkopplung und elektrischer oder auch mechanischer Phasenverschiebung und nach entsprechender Verstärkung kann dieses Signal direkt auf die massenbeaufschlagte Spule 13 gegeben werden, und zwar so, daß die auftretenden Restbeschleunigungen und Schwingbewegungen automatisch minimiert werden.

Dabei empfiehlt sich als Sensor 20 ein seismisches System, bestehend aus einer Masse 21 und einer federbeaufschlagten Spule 22 innerhalb eines Permanentmagneten 23, wobei die Spule ein ihrer Schwinggeschwindigkeit in erster Näherung proportionales elektrisches Signal abgibt.

Für den vorliegenden Fall ist eine Phasenverschiebung von 180° zwischen der Schwingungserregung und der Tilgerspule 13 notwendig, um ein optimales Ergebnis zu erzielen. Diese Phasenverschiebung kann durch eine Umkehrschaltung oder eine Verzögerungsschaltung erreicht werden. Sie läßt sich aber auch auf mechanischem Wege sehr einfach dadurch bewirken, daß die Masse auf der Sensorspule im Sensor praktisch in Druckrichtung angebracht wird, während die Tilgermasse an der Spule des Entkopplungssystems nach unten gerichtet und somit in Zugrichtung angeordnet ist-- oder aber entsprechend umgekehrt. Dadurch ergibt sich dann automatisch eine Signalverschiebung um 180°, die lediglich einer zwischengeschalteten Verstärkung bedarf, um das System zu optimieren.

Fig. 3 zeigt nunmehr einen Schnitt durch ein entsprechendes Lager mit einer zusätzlichen Zwischenmasse 25. Dabei stützen sich die Motorstützen 2 bzw. 3 zunächst auf der Oberplatte 27 eines prismatischen Gummikörpers 26 aus hochdämpfenden Material ab. Zwischen diesem Gummikörper 26 und den Gummikörpern 6 des eiegentlichen Keillagers 4 ist nunmehr eine metallische Zwischenmasse 25 angeordnet, deren Masse etwa 100 bis 1000 g betragen kann.

Der Vorteil einer solchen Zwischenmasse liegt darin, daß bei eingeleiteten Schwingungen jenseits des sich ergebenden Zwischenmassenpeaks, d.h. der Eigenfrequenz der Zwischenmasse, die Isolation bzw. Dämmung hochfrequenter Schwingungen sehr viel besser ist als bei einer Anordnung ohne Zwischenmasse; der Nachteil liegt allein in der schlechten Dämmung im Bereich der Eigenfrequenz dieser Zwischenmasse.

Dieser Nachteil kann aber hierbei auch durch das Entkopplungssystem 10 - wie bei der Anordnung nach Fig. 2 beschrieben - behoben werden. Der elektrodynamische Tilger 15, 16 konterkariert dabei das Zwischenmassenpeak, so daß im hochfrequenten Bereich oberhalb der hochdämpfenden Wirkung des verwendeten Gummis für niedere Frequenzen etwa bis zu 20 Hz zunächst eine Dämmung von 40 dB/Dekade und in Bereichen jenseits des ursprünglichen Zwischenmassenpeaks eine Dämmung proportional ¹/_{f}⁴, d.h. von 80 dB/Dekade, erfolgt.

Die wesentlichen Vorteile solcher Anordnungen bestehen darin, daß jetzt für das eigentliche Traglager ein hochdämpfender Gummi verwendet werden kann, um damit niederfrequente Schwingungen optimal zu dämpfen und daß für übertragene hochfrequente Schwingungen im akustischen Bereich ein einfach aufgebautes elektrodynamisches Entkopplungssystem vorgesehen ist, das eine dynamische Kraftentkopplung bewirkt. Dieses Entkopplungssystem macht dabei alle von der Karosserie herrührenden großhubigen Bewegungen mit, ohne daß es dabei die Fähigkeit einbüßt, hochfrequente Wechselkräfte zu erzeugen.

Dabei wird bei einem Ausfall dieses Systems die eigentliche Abstützfunktion des Lagers in keiner Weise beeinträchtigt, so daß damit auch die Betriebssicherheit nicht vermindert wird.

## Patentansprüche

1. Elastische Motorlagereinheit für Kraftfahrzeuge, bestehend aus einem Motorlager (4) mit mindestens einem elastischen Gummikörper (6), der zwischen Motor (1) und einem Träger (7) der Fahrzeugkarosserie angeordnet ist, und einem elektrodynamisch in Schwingungen versetzbaren Entkoppelungssystem (10), dadurch gekennzeichnet, daß der Gummikörper (6; 26) aus hochdämpfenden Material mit einem Verlustwinkel von über 12° besteht und das Entkoppelungssytem (10), das über den Gummikörper (6; 26) übertragene Schwingungen im Bereich von etwa 50 bis 300 Hz dämmt, vollständig außerhalb des eigentlichen Motorlagers (4) an dem karosserieseitigen Träger (7) auf diesen einwirkend angeordnet ist und unter Ansteuerung von einem Schwingungssensor (20) dynamische Wechselkräfte in Gegenphase zu den übertragenden hochfrequenten Schwingungen erzeugt.

2. Elastische Motorlagereinheit nach Anspruch 1, dadurch gekennzeichnet, daß das Entkoppelungssystem (10) einem stationären Permanentmagneten (11) und eine bewegliche elektrische Spule (13) aufweist, die mit einer Tilgermasse (15, 16) gekoppelt ist.

3. Elastische Motorlagereinheit nach Anspruch 2, dadurch gekennzeichnet, daß der Permanentmagnet (11) ringförmig ausgebildet und von einer elastischen Membran (14) überspannt ist, die mittig eine Tilgermasse (16) trägt und an die elektrische Spule (13) angekoppelt ist.

4. Motorlager nach Anspruch 3, dadurch gekennzeichnet, daß die Tilgermasse (15) topfförmig ausgebildet und von der Spule (13) umschlossen ist.

5. Motorlager nach Anspruch 3 und 4, dadurch gekennzeichnet, daß das Gewicht der Tilgermassen (15,16) etwa 5 bis 100 Gramm beträgt.

6. Elastische Motorlagereinheit nach Anspruch 1, dadurch gekennzeichnet, daß der Sensor (20) schwingungsproportionale, jedoch phasenverschobene Signale an die Tilgerspule (13) abgibt.

7. Motorlager nach Anspruch 1 und 6, dadurch gekennzeichnet, daß der Sensor (20) aus einem seismischen System mit einer Masse (21) und einer federbeaufschlagten Spule (22) besteht, das ein seiner Schwingbewegung angenähert proportionales Signal abgibt.

8. Elastische Motorlagereinheit nach Anspruch 2 und 7, dadurch gekennzeichnet, dadurch gekennzeichnet, daß eine mechanische Phasenverschiebung von etwa 180° zwischen Sensorspule (22) und Tilgerspule (13) vorgesehen ist derart, daß die Masse (21) der Sensorspule (22) in Druckrichtung und die Masse (15, 16) der Tilgerspule (13) in Zugrichtung -jeweils bezogen auf den Permanentmagneten (23; 11)- angeordnet ist.

9. Elastische Motorlagereinheit nach Anspruch 1, dadurch gekennzeichnet, daß der Gummikörper (6; 26) eine Zwischenmasse (25) aufweist.

10. Elastische Motorlagereinheit nach Anspruch 9, dadurch gekennzeichnet, daß die metallische Zwischenmasse (25) zwischen einem oberen, an die Motorstützen (2, 3) angeschlossenen Gummikörper (26) und den unteren, keilförmigen Gummikörpern(6) angeordnet ist.

11. Elastische Motorlagereinheit nach Anspruch 10, dadurch gekennzeichnet, daß die Zwischenmasse (25) ein Gewicht von etwa 100 bis 1.000 Gramm aufweist.

## Claims

1. Elastic engine mount unit for motor vehicles, comprising an engine mount (4) with at least one elastic rubber element (6), which is arranged between the engine (1) and a carrier (7) of the motor vehicle body, and a decoupling system (10), which can be caused to vibrate electrodynamically, characterized in that the rubber element (6; 26) is made of high-damping material with an angle of loss greater than 12° and the decoupling system (10), which damps vibrations transmitted via the rubber element (6; 26) in the range from approximately 50 to 300 Hz, is arranged entirely outside the actual engine mount (4) on the carrier (7) facing the vehicle body so as to act upon the said carrier and, controlled by a vibration sensor (20), generates dynamic alternating forces in counterphase to the high frequency vibrations which are to be transmitted.

2. Elastic engine mount unit according to claim 1, characterized in that the decoupling system (10) comprises a stationary permanent magnet (11) and a movable electric coil (13), which is coupled to an absorber body (15, 16).

3. Elastic engine mount unit according to claim 2, characterized in that the permanent magnet (11) is annular in shape and is spanned by an elastic diaphragm (14), which in its centre carries an absorber body (16) and is coupled to the electric coil (13).

4. Engine mount according to claim 3, characterized in that the absorber body (15) is cup-shaped and is surrounded by the coil (13).

5. Engine mount according to claims 3 and 4, characterised in that the weight of the absorber body (15, 16) is approximately 5 to 100 g.

6. Elastic engine mount unit according to claim 1, characterised in that the sensor (20) transmits signals to the absorber coil (13) proportional to the vibrations but with phase-displacement.

7. Engine mount according to claims 1 and 6, characterised in that the sensor (20) is formed by a seismic system with a body (21) and a coil (22), which is acted upon by a spring and transmits a signal approximately proportional to its vibrational movement.

8. Elastic engine mount unit according to claims 2 and 7, characterised in that a mechanical phase displacement of approximately 180° is provided between the sensor coil (22) and the absorber coil (13), so that the body (21) of the sensor coil (22) is arranged in the direction of compression and the body (15, 16) of the absorber coil (13) in the direction of traction - in each case in relation to the permanent magnet (23; 11).

9. Elastic engine mount unit according to claim 1, characterised in that the rubber element (6; 26) comprises an intermediate body (25).

10. Elastic engine mount unit according to claim 9, characterised in that the metallic intermediate body (25) is arranged between an upper rubber element (26) connected to the engine supports (2, 3) and the lower, wedge-shaped rubber elements (6).

11. Elastic engine mount unit according to claim 10, characterised in that the intermediate body (25) has a weight of approximately 100 to 1,000 g.

## Revendications

1. Unité élastique de support de moteur pour véhicules automobiles, constituée d'un support (15) de moteur ayant au moins une pièce (6) élastique en caoutchouc, interposée entre le moteur (1) et un support (7) de la carrosserie du véhicule, et d'un système de découplage (10) pouvant être mis en oscillation par voie électrodynamique, caractérisée par le fait que la pièce (6; 26) en caoutchouc est en une matière à grand coefficient d'amortissement et ayant un angle de perte supérieur à 12° et que le système de découplage (10), qui amortit des oscillations transmises par l'intermédiaire de la pièce (6; 26) en caoutchouc, dans l'intervalle d'environ 50 à 300 Hz, est disposé entièrement à l'extérieur du support (4) du moteur proprement dit, sur le support (7) côté carrosserie, de manière à agir sur ce support et, sous la commande d'un capteur d'oscillations (20), produit des forces alternatives dynamiques en opposition de phase avec les oscillations à haute fréquence transmises.

2. Unité suivant la revendication 1, caractérisée par le fait que le système de découplage (10) comporte un aimant permanent (11) fixe et une bobine électrique (13) mobile, qui est couplée à une masselotte d'amortissement (15, 16).

3. Unité suivant la revendication 2, caractérisée par le fait que l'aimant permanent (11) est annulaire et que sur cet aimant est tendue une membrane élastique (14), qui porte en son centre une masselotte d'amortissement (16) et qui est couplée à la bobine électrique (13).

4. Support de moteur suivant la revendication 3, caractérisé par le fait que la masselotte d'amortissement (15) est en forme de pot et est entourée de la bobine (13).

5. Support de moteur suivant la revendication 3 ou 4, caractérisé par le fait que le poids des masselottes d'amortissement (15,16) est compris entre environ 5 et 100 grammes.

6. Unité suivant la revendication 1, caractérisée par le fait que le capteur (20) envoie à la bobine d'amortissement (13) des signaux, qui sont proportionnels à l'oscillation mais déphasés.

7. Support de moteur suivant la revendication 1 ou 6, caractérisé par le fait que le capteur (20) est constitué d'un système sismique comportant une masselotte (21) et une bobine (22) soumise à l'action d'un ressort et envoyant un signal qui est approximativement proportionnel à son déplacement vibratoire.

8. Unité suivant la revendication 2 ou 7, caractérisée par le fait qu'un déphasage mécanique d'environ 180° est prévu entre la bobine (22) du capteur et la bobine d'amortissement (13) de sorte que la masselotte (21) de la bobine (22) du capteur est disposée dans la direction de compression et la masselotte (15,16) de la bobine d'amortissement (13) est disposée dans la direction de traction - respectivement par rapport aux amants permanents (23; 11).

9. Unité suivant la revendication 1, caractérisée par le fait que la pièce (6; 26) en caoutchouc comporte une masselotte intermédiaire (25).

10. Unité suivant la revendication 9, caractérisée par le fait que la masselotte intermédiaire (25) métallique est interposée entre une pièce (26) supérieure en caoutchouc, qui est raccordé aux appuis (2, 3) du moteur, et les pièces (6) inférieures en caoutchouc cunéiformes de coins.

11. Unité suivant la revendication 10, caractérisée par le fait que la masselotte intermédiaire (25) a un poids compris entre environ 100 et 1000 grammes.
